**Europäisches Patentamt**

**European Patent Office**

**Office européen des brevets**

(11) Veröffentlichungsnummer: **0 048 395**

**A1**

# (12) EUROPÄISCHE PATENTANMELDUNG

(21) Anmeldenummer: **81107113.3**

(22) Anmeldetag: **10.09.81**

(51) Int. Cl.³: **C 08 G 65/44**

(30) Priorität: **20.09.80 DE 3035599**

(43) Veröffentlichungstag der Anmeldung:
**31.03.82 Patentblatt 82/13**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Brandstetter, Franz, Dr.**
**Ritterbuechel 45**
**D-6730 Neustadt(DE)**

(72) Erfinder: **Haaf, Franz, Dr.**
**Leistadter Strasse 9**
**D-6702 Bad Duerkheim(DE)**

(72) Erfinder: **Naarmann, Herbert, Dr.**
**Haardtblick 15**
**D-6719 Wattenheim(DE)**

(72) Erfinder: **Schuster, Hans H, Dr.**
**Luitpoldstrasse 166**
**D-6700 Ludwigshafen(DE)**

(54) Verfahren zur Herstellung von Polyphenylenäthern.

(57) Verfahren zur Herstellung hochmolekularer Polyphenylenäther aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 22°C in Anwesenheit eines Katalysatorkomplexes aus einem Kupfersalz und einem organischen Amin in Gegenwart eines Lösungsmittels im Bereich von 1:1 bis 20:1 Gewichtsteilen und gegebenenfalls eines Aktivators, wobei ein organisches primäres oder sekundäres Amin mit einer aliphatischen Anordnung von $C_3$- bis $C_{15}$-Atomen verwendet und der Katalysator in die Vorlage des gelösten Monomeren eindosiert wird.

Geeignete Amine sind Pentylamin, Hexyla-min, Heptyla-min, Dibutylamin, Octylamin, Nonylamin oder deren Mono-, Di- oder Trimethylderivate, insbesondere 1,4-Dimethylpentylamin.

Vorteilhaft kann man den Katalysator, bestehend aus einem Komplex aus Kupfer-I-salz-Amin und 0,01 bis 5 Gew.% 2,6-Dimethylphenol in das in aromatischen Lösungsmitteln vorgelegte Monomer unter gleichzeitigen $O_2$- und/oder Luftbegasung eindosieren.

BASF Aktiengesellschaft                    O.Z. 0050/034685

Verfahren zur Herstellung von Polyphenylenäthern

Die Erfindung betrifft ein Verfahren zur Herstellung hochmolekularer Polyphenylenäthern aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 25 und 50°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist bekannt, zur Erfüllung dieser Erfordernisse in aromatischen Lösungsmitteln wie Benzol oder Toluol die Reaktion in Anwesenheit eines Katalysatorkomplexes aus Kupfer-II-Salzen und einem geradkettigen aliphatischen Amin sowie einem niedermolekularen Alkylalkohol durchzuführen (vgl. US-PS 3 661 848). Nach Beendigung der Reaktion wird die das Polymere enthaltende Aromatenlösung mit etwa der 10-fachen Menge Methanol versetzt, das ausgefällte Polymere abfiltriert, mit Methanol gewaschen und bei 70°C im Vakuum getrocknet.

Dieser bisher ausgeübte Reaktionsweg weist neben dem Nachteil der vergleichsweise geringen Polymerenausbeute auch den Nachteil der Bildung von Nebenprodukten wie Tetramethyldiphenochinon und niedermolekularen Polyphe-Fre/BL

nylenäther auf. Außerdem bestehen bei diesem Verfahren Sicherheitsbedenken wegen der Ausbildung explosibler Gemische im Gasraum oberhalb der Reaktionsflüssigkeit.

Der Erfindung lag die Aufgabe zugrunde, durch Abändern der Polymerisationsbedingungen Polymere mit hoher Ausbeute zu erhalten, die ein vergleichbar hohes Molekulargewicht aufweisen und eine einheitliche Molekulargewichtsverteilung zeigen und darüberhinaus mit einem Höchstmaß an Sicherheit reproduzierbar herstellbar sind.

Diese Aufgabe wird erfindungsgemäß dadurch gelöst, daß ein primäres oder sekundäres organisches Amin mit einer aliphatischen Anordnung mit $C_3$- bis $C_{15}$-Atomen verwendet wird, die Polykondensationstemperatur zwischen 15 und $22^{\circ}C$ liegt und der Katalysator in die Vorlage des gelösten Monomeren eindosiert wird. Bevorzugte organische Amine sind Pentyl-, Dibutyl-, Hexyl-, Heptyl-, Octyl-, Nonylamin oder deren Mono-, Di- oder Trimethylderivate. Am besten geeignet ist das 1,4-Dimethylpentylamin.

Besonders bevorzugt ist ein Verfahren, bei dem der Katalysator, bestehend aus einem Komplex aus Kupfer-I-Salz/Amin und 0,01 bis 5 Gew.-% 2,6-Dimethylphenol in das in aromatischen Lösungsmitteln vorgelegte Monomere unter gleichzeitiger $O_2$- und/oder Luftbegasung eindosiert wird.

Unter hochmolekularen Polyphenylenäthern werden die durch oxidative Kupplung von 2,6-Dialkylphenol zu einer Kette alkylsubstituierter, in para-Stellung durch Sauerstoffatome ätherartig gebundene Benzolringe verstanden. Die erfindungsgemäßen Polymeren weisen Molekulargewichte von 23 000 bis 40 000, bevorzugt 25 000 bis 30 000, bestimmt nach der in "Macromolecular Synthesis" 1 (1978), Seite 83 angegebenen Methode, auf. Hochmolekulare Polyphenylenäther, auch Poly(phenylenoxide) genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

Die zur Herstellung der hochmolekularen Polyphenylenäther verwendeten einwertigen Phenole, die in den beiden ortho--Stellungen und gegebenenfalls der meta-Position, nicht aber in der para-Stellung Alkylsubstituenten aufweisen, sind die üblichen Phenole wie 2,6-Dimethylphenol, 2,6-Diäthylphenol, 2-Methyl-6-äthylphenol, 2-Methyl-6-propyl-phenol, 2,6-Dibutylphenol, 2,3,6-Trimethylphenol sowie Gemische dieser Phenole.

Zur Ausführung der Polykondensation wird üblicherweise Sauerstoff in die 25 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach den bevorzugt erfindungsgemäßen Verfahren wird der Katalysator aus Kupfersalz, vorzugsweise Kupfer-I-bromid, Amin und 0,01 bis 5 Gew.-% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z.B. n-Dibutylamin, Diäthylamin, Picolin, Chinolin, Pyridinbasen, Triisopropylamin, Dimethylisopropanolamin, Triäthanolamin, Triisopropanolamin oder Diisopropanolamin mit einem Kupfersalz wie Kupfer-I-Bromid, Kupfer-I-Chlorid, Kupfer-I-Jodid, Kupfer-II-Acetat, Kupfer--II-Propionat, Kupfer-II-Acetessigester oder Kupfer-II--Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuß des 20-fachen am Lösungsmittel, bezogen auf das Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüberhinaus kann die Reaktionsmischung einen Aktivator wie ein Diarylguanidin oder ein Diarylformamidin enthalten (vgl. US-PS 3 544 515).

Nach dem erfindungsgemäßen Verfahren soll als Amin ein primäres oder sekundäres Amin mit einer aliphatischen Anordnung von $C_3$- bis $C_{15}$-Atomen verwendet werden. Besonders bevorzugte Amine sind Pentylamin, Hexylamin, Heptylamin, Dibutylamin, Octylamin, Nonylamin oder deren Mono-, Dioder Trimethylderivate wie 1-Methylphenylamin, 1-Methyloctylamin, 1,5-Dimethyloctylamin, 1,6-Dimethylnonylamin oder 1,4-Dimethylbutylamin. Am besten geeignet ist das 1,4-Dimethylpentylamin. Ein bevorzugter Bereich bei der Menge des eingesetzten Amins liegt bei 2,0 bis 25 Gew.-%, bezogen auf das Monomere. Als Kupfersalze sind die üblichen geeignet wie Chloride, Bromide, Sulfate, Acetate, Acetylacetonate, Propionate oder Acetylacetate, vorzugsweise Kupfer-I-bromid. Die Konzentration des Kupfersalzes im Aminkomplex ist die bei der Polykondensation von Phe- nolen übliche und variiert vorzugsweise von 0,2 bis 2,5 Mol pro 100 ml des Monomeren.

Beim erfindungsgemäßen Verfahren wird die Polykondensationsreaktion bei Temperaturen zwischen 15 und 22, vorzugsweise 18 und 22°C durchgeführt. Hierzu wird der Sauerstoff in die 15 bis 22°C warme Lösung des Monomeren in Gegenwart des erfindungsgemäßen Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert.

Die mit der Erfindung erzielten Vorteile bestehen insbesondere darin, daß die Polymeren in Ausbeuten von größer als 95 Gewichtsprozent, bezogen auf das eingesetzte Monomere, erhalten werden können und daß die Molekulargewichtsverteilung sehr einheitlich ist und bei dieser Reaktion im Reaktionsgefäß kein explosibler Gasraum besteht. Das Molekulargewicht der erhaltenen Polymeren liegt zwischen 23 000 und 40 000, bevorzugt 25 000 bis 30 000, bestimmt nach der in "Makromolecular Synthesis" 1, (1978) Seite 83 beschriebenen Methode.

Die Erfindung wird durch die nachfolgenden Beispiele näher erläutert.

Beispiel 1
Herstellung von Poly-(2,6-dimethyl-1,4-phenylen)-äther

Eine Vorlage von 1,3 g Cu-I-Bromid und 20 g 1,4-Dimethylpentylamin und 2 g 2,6-Dimethylphenol (= DMP) wird bei 20°C 5 Minuten unter Einleiten von Sauerstoff gerührt, und dann wird im Verlauf von 30 Minuten in eine Lösung von 204 g DMP in 1 400 Toluol eindosiert. Anschließend wird noch 1 Stunde bei 20°C gerührt. Die Reaktion wird in Gegenwart von 30 Liter Sauerstoff pro Stunde durchgeführt.

Nach Beendigung der Reaktion wird das Polymerisat in der Reaktionslösung mit Methanol ausgefällt und 2mal mit 100 ml Methanol gewaschen. Das erhaltene Polymerisat hat nach dem Trocknen eine Intrinsic Viskosität $[\eta]$ von 0,8 dl/g. Die Ausbeute an Polymeren lag bei 98 % (bezogen auf eingesetztes Monomeres). Analyse: Cu-Gehalt: 3 ppm, N-Gehalt: 0,09 %.

Beispiel 2

Wird wie im Beispiel 1 beschrieben gearbeitet, jedoch Art und Menge der Katalysatoren variiert, so werden die in der folgenden Tabelle wiedergegebenen Resultate erhalten.

Tabelle

| Beispiel Nr. | Cu-Salz g wasserfrei | | Einsatz von jeweils 206 g DMP Amin Art und Menge in g | | dl/g |
|---|---|---|---|---|---|
| 2 | Cu-I-Br | 1,3 | Octylamin | 33 g | 0,73 |
| 3 | CU-I-Br | 1,3 | Pentylamin | 33 g | 0,79 |
| 4 | Cu-I-Br | 1,3 | Heptylamin | 33 g | 0,70 |
| 5 | Cu-I-Br | 1,3 | 1-Methylpentylamin | 33 g | 0,60 |
| 6 | Cu-I-Br | 1,3 | 1,4-Dimethylpentylamin | 33 g | 0,65 |
| 7 | Cu-I-Cl | 1,3 | 1-Methyloctylamin | 33 g | 0,63 |
| 8 | Cu-I-J | 1,3 | 1,5-Dimethyloctylamin | 33 g | 0,80 |
| 9 | Cu-I-Br | 3,6 | Nonylamin | 33 g | 0,79 |
| 10 | Cu-I-Br | 2,6 | Dibutylamin | 33 g | 0,62 |
| 11 | Cu-I-Br | 1,3 | Dibutylamin | 33 g | 0,68 |
| 12 | Cu-I-Br | 1,0 | Dibutylamin | 25 g | 0,62 |
| 13 | Cu-I-Br | 0,9 | Dibutylamin | 33 g | 0,63 |
| 14 | Cu-I-Br | 0,8 | Dibutylamin | 33 g | 0,56 |
| 15 | Cu-I-Br | 0,4 | Dibutylamin | 33 g | 0,53 |
| 16 | Cu-II-Br | 1,2 | 1,4-Dimethyl-pentylamin | 33 g | 0,61 |
| 17 | Cu-I-Br | 1,2 | Octylamin | 15 g | 0,57 |
| 18 | Cu-I-Br | 0,6 | Dibutylamin | 30 g | 0,52 |

Die Dosierungszeit des Katalysators betrug bei den Versuchen 2 bis 10 jeweils 60 Minuten;
bei den Versuchen 11 bis 14 45 Minuten und bei den Versuchen 15 bis 18 30 Minuten.

Patentansprüche

1. Verfahren zur Herstellung hochmolekularer Polyphenylenäther aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 25 und 50°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol, und gegebenenfalls eines Aktivators, dadurch gekennzeichnet, daß ein organisches primäres oder sekundäres Amin mit einer aliphatischen Anordnung von $C_3$- bis $C_{15}$- -Atomen verwendet wird, die Polykondensationstemperatur zwischen 15 und 22°C liegt, und der Katalysator in die Vorlage des gelösten Monomeren eindosiert wird.

2. Verfahren nach Anspruch 1, dadurch gekennzeichnet, daß das Amin ein Pentylamin, Hexylamin, Heptylamin, Dibutylamin, Octylamin, Nonylamin oder deren Mono-, Di- oder Trimethylderivat ist.

3. Verfahren nach Anspruch 1, dadurch gekennzeichnet, daß das Amin 1,4-Dimethylpentylamin ist.

4. Verfahren nach Anspruch 1, dadurch gekennzeichnet, daß der Katalysator, bestehend aus einem Komplex aus Kupfer-I-salz/Amin und 0,01 bis 5 Gew.-% 2,6-Dimethylphenol in das in aromatischen Lösungsmitteln vorgelegte Monomer unter gleichzeitigen $O_2$- und/oder Luftbegasung eindosiert wird.

0048395

Nummer der Anmeldung

EP 81 10 7113.3

**Europäisches Patentamt**

## EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - B - 2 160 419 (MITSUBISHI GAS CHEMICAL CO., INC.) <br> * Anspruch 2; Beispiele 12 bis 23; Spalte 2, Zeilen 64 bis 66 * | 1,2 | C 08 G 65/44 |
| A | DE - A - 2 011 709 (GENERAL ELECTRIC CO.) <br> * Seite 8, Zeilen 5 bis 12 * | 4 | |

**RECHERCHIERTE SACHGEBIETE (Int. Cl.³)**

C 08 G 65/44

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 09-11-1981 | WIBMER |

EPA form 1503.1   06.78